# EUROPÄISCHE PATENTSCHRIFT

(11) **EP 3 066 395 B1**
(45) Veröffentlichungstag und Bekanntmachung des Hinweises auf die Patenterteilung: **10.04.2019**
(21) Anmeldenummer: 14795608.0
(22) Anmeldetag: 04.11.2014
(51) Int. Cl.: F24D 3/10, F24F 5/00, F24D 19/10, F24D 3/14, F24D 3/12

(54) **HYDRAULISCHER VERTEILER FÜR EIN HYDRAULISCHES HEIZUNGS- UND/ODER KÜHLSYSTEM**
HYDRAULIC DISTRIBUTOR FOR A HYDRAULIC HEATING AND/OR COOLING SYSTEM
DISTRIBUTEUR HYDRAULIQUE POUR UN SYSTÈME DE CHAUFFAGE ET/OU DE REFROIDISSEMENT HYDRAULIQUE

(30) Priorität: 07.11.2013 EP 13192027
(43) Veröffentlichungstag der Anmeldung: 14.09.2016
(73) Patentinhaber: Grundfos Holding A/S, 8850 Bjerringbro (DK)
(72) Erfinder: SØRENSEN, Søren Emil, DK-8860 Ulstrup (DK); ANDERSEN, Rasmus Hessellund, DK-8230 Åbyhøj (DK)
(74) Vertreter: Patentanwälte Vollmann Hemmer Lindfeld Partnerschaft mbB
(86) Internationale Anmeldenummer: PCT/EP2014/073723
(87) Internationale Veröffentlichungsnummer: WO 2015/067610

(56) Entgegenhaltungen:
- WO-A1-2008/041897
- DE-A1-102006 010 562
- DE-U1-202009 003 093
- US-B1- 6 345 770

## Beschreibung

Die Erfindung betrifft einen hydraulischen Verteiler für ein hydraulisches Heizungs- und/oder Kühlsystem mit den im Oberbegriff des Anspruchs 1 angegebenen Merkmalen.

Beispielsweise in Fußbodenheizungsanlagen sind hydraulische Verteiler vorgesehen, an welche die einzelnen Fußbodenheizungskreise angeschlossen sind. Die Verteiler sind dabei im Wesentlichen aus zwei Rohren gebildet, einem Rohr, welches eine Zulaufleitung bildet, und einem Rohr, welches eine Rücklaufleitung bildet. An den beiden Rohren ist eine bestimmte Anzahl von Anschlüssen für die einzelnen Heizungskreise bzw. Lastkreise vorgesehen, wobei jeder Lastkreis mit einem Ende mit der Zulaufleitung und mit dem anderen Ende mit einem Anschluss der Rücklaufleitung verbunden wird. Nachteilig bei diesen hydraulischen Verteilern ist, dass sie für eine vorbestimmte Anzahl von Heizungskreisen gefertigt sind, sodass für verschiedene Heizungsanlagen mit verschiedenen Zahlen von Lastkreisen verschiedene Verteiler vorgehalten werden müssen.

DE 10 2006 010 562 A1 offenbart eine Verteilervorrichtung für einen aus einer Heiz- und/oder Kühlquelle stammenden Wärmeträger gemäß dem Oberbegriff von Anspruch 1. Dabei kann die Verteilervorrichtung baukastenförmig ausgebildet sein, in der Weise, dass Verteilerbereiche mit Verschlussbereichen und Anschlussbereichen zusammengefügt werden. Zusätzlich wird ein Steuerungsmodul, welches eine elektronische Steuereinrichtung darstellt, angefügt. Bei diesem Verteiler ist für jeden hydraulischen Kreis eine separate Pumpe vorgesehen.

men ergeben sich aus den Unteransprüchen, der nachfolgenden Beschreibung sowie den beigefügten Figuren.

Der erfindungsgemäße hydraulische Verteiler bildet eine Baueinheit und kann in einem hydraulischen Heizungs- und/oder Kühlsystem Verwendung finden, d. h. in einem Heizungs- und/oder Kühlsystem, welches ein Fluid bzw. eine Flüssigkeit als Wärmeträger verwendet. Bevorzugt handelt es sich bei der Flüssigkeit um Wasser. Der Wärmeträger wird ausgehend von einer Wärme- oder Kältequelle durch Rohrleitungen in die zu temperierenden Räume bzw. Objekte geleitet. Zur Verteilung des Fluids auf mehrere Lastkreise ist der hydraulische Verteiler gemäß der Erfindung vorgesehen. Der hydraulische Verteiler weist dazu eine Zulaufleitung und eine Rücklaufleitung auf. An die Zulaufleitung werden die Eingänge der Lastkreise und an die Rücklaufleitung die Ausgänge der Lastkreise angeschlossen. Die Zulaufleitung und die Rücklaufleitung sind dann wiederum mit der Heizungs- oder Kühlanlage, d. h. über weitere Rohrleitungen mit einer Wärme- und/oder Kältequelle, verbunden. Dabei ist zu verstehen, dass das System ausschließlich als Heizungssystem oder ausschließlich als Kühlsystem oder aber als System, welches sowohl der Heizung als auch der Kühlung dienen kann, ausgelegt sein kann. So kann beispielsweise das System im Sommer zur Kühlung und im Winter zur Heizung verwendet werden.

Die Zulaufleitung weist zumindest einen Zulaufanschluss und die Rücklaufleitung zumindest einen Rücklaufanschluss auf, an welche zumindest ein Lastkreis angeschlossen wird. Dabei wird der Eingang des Lastkreises an den Zulaufanschluss und der Ausgang des Lastkreises an den Rücklaufanschluss angeschlossen.

Um eine universelle Verwendung des hydraulischen Verteilers für Heizungs- bzw. Kühlsysteme mit unterschiedlichen Anzahlen von Lastkreisen zu ermöglichen, ist der erfindungsgemäße hydraulische Verteiler modular aufgebaut. Er weist zumindest ein Hauptmodul und zumindest ein an dieses lösbar angesetztes oder ansetzbares Lastmodul auf. Das Hauptmodul dient der Versorgung und Steuerung, während das Lastmodul zum Anschluss eines Lastkreises dient. Wenn mehrere Lastkreise vorhanden sind, ist eine entsprechende Anzahl von Lastmodulen, d. h. ein Lastmodul pro Lastkreis vorgesehen. Der modulare Aufbau ermöglicht es, eine gewünschte Anzahl von Lastmodulen zur Anpassung des hydraulischen Verteilers an ein spezifisches Kühl- bzw. Heizungssystem mit dem einen Hauptmodul zu verbinden. Die zusammengesetzten Module bilden dann eine Baueinheit. Das Hauptmodul weist zumindest einen Abschnitt der Zulaufleitung und/oder der Rücklaufleitung sowie einen elektrischen Anschluss auf. Besonders bevorzugt weist das Hauptmodul Abschnitte sowohl der Zulaufleitung als auch der Rücklaufleitung auf.

Auch das zumindest eine Lastmodul weist einen Abschnitt der Zulaufleitung mit einem Zulaufanschluss und einen Abschnitt der Rücklaufleitung mit einem Rücklaufanschluss auf. An den Zulaufanschluss und den Rücklaufanschluss wird in der oben beschriebenen Weise ein Lastkreis angeschlossen. Ferner weist das zumindest eine Lastmodul eine Reguliereinrichtung zum Regulieren des Durchflusses durch einen an den Zulauf- und den Rücklaufanschluss angeschlossenen Lastkreis auf. Die Regulierung des Durchflusses ermöglicht eine Veränderung im Betrieb der Heizungsanlage zur Anpassung an einen aktuellen Energiebedarf des Lastkreises. Die Reguliereinrichtung kann vorzugsweise als motorbetriebenes Ventil, insbesondere Proportionalventil oder als Umwälzpumpe ausgebildet sein. Es können jedoch auch auf andere Weise angetriebene Ventile, z. B. thermoelektrisch angetriebene Ventile mit entsprechender zeitlich variierter Ansteuerung verwendet werden. Im Falle eines Ventils wird die Durchflussregelung bzw. -steuerung durch Veränderung des Öffnungsgrades des Ventils erreicht. Im Falle einer Umwälzpumpe kann der Durchfluss durch Drehzahländerung der Umwälzpumpe erreicht werden. Bei Verwendung eines Ventils ist dieses vorzugsweise so ausgestaltet, dass es auch vollständig geschlossen werden kann, um den Lastkreis ganz abzuschalten, wie es unten beschrieben wird.

Die Reguliereinrichtung ist im Inneren des Lastmoduls in einem der Strömungswege im Zulauf oder im Rücklauf zu dem Lastkreis angeordnet. D. h. die Reguliereinrichtung kann zwischen dem Zulaufanschluss und dem Abschnitt der Zulaufleitung oder zwischen dem Rücklaufanschluss und dem Abschnitt der Rücklaufleitung im Strömungsweg im Inneren des Lastmoduls angeordnet sein.

Erfindungsgemäß weist das Hauptmodul eine Verteiler-Steuereinrichtung auf, welche zur Steuerung der Reguliereinrichtung in dem zumindest einen und vorzugsweise in mehreren Lastmodulen vorgesehen ist. Die Verteiler-Steuereinrichtung in dem Hauptmodul bildet so eine zentrale Steuereinrichtung, welche die Reguliereinrichtungen in den Lastmodulen, vorzugsweise in allen Lastmodulen steuert bzw. regelt. Die zentrale Steuerung der Reguliereinrichtungen hat den Vorteil, dass in der Steuerung Wechselwirkungen zwischen den einzelnen Lastkreisen berücksichtigt werden können und so die Gesamtanlage optimal gesteuert werden kann, sodass jeder Lastkreis optimal mit der erforderlichen Menge des Wärmeträgers versorgt wird. Darüber hinaus hat diese Ausgestaltung den Vorteil, dass nur eine Steuereinrichtung für das Gesamtsystem vorgesehen werden muss und die Lastmodule keine aufwändigen elektronischen Komponenten benötigen, sodass der Aufbau der Lastmodule vereinfacht und so die Kosten für die Lastmodule reduziert werden können. Die beschriebenen elektrischen Kupplungen stellen eine elektrische Verbindung zwischen der Verteiler-Steuereinrichtung in den Hauptmodul und den Reguliereinrichtungen in den Lastmodulen zu deren Ansteuerung her. Dabei kann bevorzugt auch eine bidirektionale Kommunikation zwischen der Verteiler-Steuereinrichtung und den Lastmodulen vorgesehen sein, über welche beispielsweise Rückmeldungen von den Reguliereinrichtungen, beispielsweise über den Öffnungsgrad und/oder Sensordaten von zusätzlich in den Lastmodulen angeordneten Sensoren an die Verteiler-Steuereinrichtung übertragen werden.

Das Hauptmodul weist zumindest ein Umwälzpumpenaggregat auf, welches in dem Abschnitt der Zulaufleitung oder in dem Abschnitt der Rücklaufleitung angeordnet ist und dazu dient, das Fluid bzw. die Flüssigkeit durch den Heiz- bzw. Kühlkreislauf, das heißt insbesondere die einzelnen Lastkreise zu fördern. Die genannte Verteiler-Steuereinrichtung dient ebenfalls zur Steuerung dieses Umwälzpumpenaggregates. So dient die Verteiler-Steuereinrichtung bevorzugt dazu, das Umwälzpumpenaggregat bedarfsgerecht ein- und auszuschalten und weiter bevorzugt auch dazu, das Umwälzpumpenaggregat in seiner Drehzahl zu steuern bzw. zu regeln, um eine gewünschte Förderleistung bzw. einen gewünschten Differenzdruck einzustellen. Dazu können zur Regelung zusätzlich geeignete Sensoren in dem Umwälzpumpenaggregat und/oder dem Hauptmodul angeordnet sein. Die Verteiler-Steuereinrichtung übernimmt somit bei dieser Ausführungsform zwei Funktionen, zum einen die Steuerung bzw. Regelung der Reguliereinrichtungen in den Lastmodulen und zum anderen auch die Steuerung bzw. Regelung des Umwälzpumpenaggregates in dem Hauptmodul. So wird nur eine zentrale Steuereinrichtung zur Steuerung bzw. Regelung des Gesamtsystems benötigt. Wie unten beschrieben, kann die Verteiler-Steuereinrichtung zum Empfang externer Sensordaten ausgebildet sein. Dabei kann auch das Umwälzpumpenaggregat gegebenenfalls auf Grundlage solch erfasster Sensordaten gesteuert bzw. geregelt werden.

Erfindungsgemäß ist die Verteiler-Steuereinrichtung in das Umwälzpumpenaggregat integriert. Das heißt, die erforderlichen elektronischen Komponenten sind in das Gehäuse des Pumpenaggregates, d. h. ein Motorgehäuse oder ein separates Elektronikgehäuse des Umwälzpumpenaggregates integriert. Ein solches Elektronikgehäuse bzw. ein Klemmenkasten kann an ein Motorgehäuse des Umwälzpumpenaggregates, in welchem ein elektrischer Antriebsmotor angeordnet ist, angesetzt sein. Besonders bevorzugt ist das Elektronikgehäuse an das axiale Stirnende des Motorgehäuses, welches einem mit dem Motorgehäuse verbundenen Pumpengehäuse abgewandt ist, angesetzt. So können die erforderlichen elektronischen Bauteile zur Steuerung bzw. Regelung des Umwälzpumpenaggregates und der Reguliereinrichtungen zentral an einer Stelle angeordnet werden. Die Anordnung im Umwälzpumpenaggregat hat den Vorteil, dass die erforderliche elektrische Verbindung mit den elektrischen Spulen des Antriebsmotors des Umwälzpumpenaggregates direkt in dieses integriert werden kann, so dass bei der Montage des Hauptmoduls neben dem Einbau des Pumpenaggregates vorzugsweise keine weiteren elektronischen Komponenten zu montieren bzw. elektrisch anzuschließen sind. So wird der Gesamtaufbau vereinfacht. Darüber hinaus kann ein für die Steuerung des Umwälzpumpenaggregates erforderliche Mikroelektronik mitgenutzt werden, um die Reguliereinrichtungen zu steuern.

Gemäß einer weiteren besonderen Ausführungsform der Erfindung kann in dem Hauptmodul eine Mischeinrichtung angeordnet sein. Eine solche Mischeinrichtung dient dazu, der Flüssigkeitsströmung im Zulauf Flüssigkeit aus Rücklauf zuzumischen, um die Temperatur der Flüssigkeit im Zulauf, das heißt die Vorlauftemperatur einstellen zu können. Dazu ist die Mischeinrichtung vorzugsweise so ausgebildet, dass sie eine Verbindung zwischen dem Abschnitt der Rücklaufleitung und dem Abschnitt der Zulaufleitung in dem Hauptmodul herstellt. Um das Mischungsverhältnis einstellen zu können, ist in dem Hauptmodul eine geeignete Mischreguliereinrichtung, beispielsweise in Form eines Regulierventils bzw. eines Mischventils angeordnet. Ein solches kann beispielsweise elektromotorisch einstellbar sein. Die Mischreguliereinrichtung kann alternativ auch von einem Pumpenaggregat gebildet sein. Gemäß einer besonderen Ausführungsform der Erfindung ist es vorgesehen, dass die Verteiler-Steuereinrichtung ebenfalls die Steuerung bzw. Regelung dieser Mischeinrichtung übernimmt, das heißt die Verteiler-Steuereinrichtung steuert bzw. regelt das von der Mischeinrichtung eingestellte Mischungsverhältnis. Dies kann beispielsweise durch Ansteuerung eines Stellmotors der Mischeinrichtung erfolgen. So kann auf eine separate Mischersteuerung verzichtet werden. Vielmehr bildet die Verteiler-Steuereinrichtung eine integrierte Steuerung, welche sowohl die Reguliereinrichtungen des Lastmodule, vorzugsweise sämtlicher Lastmodule steuert und darüber hinaus vorzugsweise auch eine in dem Hauptmodul angeordnete Mischeinrichtung steuert bzw. regelt. Weiter bevorzugt wird zusätzlich von der Verteiler-Steuereinrichtung, wie vorangehend beschrieben, auch die Steuerung bzw. Regelung eines Umwälzpumpenaggregates bzw. Pumpenaggregates in dem Hauptmodul übernommen.

Ferner weisen das Hauptmodul und das Lastmodul bevorzugt zueinander korrespondierende mechanische und hydraulische Kupplungen sowie eine elektrische Verbindung auf. Diese sind so ausgestaltet, dass sie eine lösbare, mechanische, hydraulische und elektrische Verbindung zwischen dem Hauptmodul und dem Lastmodul ermöglichen. Die mechanischen Kupplungen zwischen Hauptmodul und Lastmodul ermöglichen dabei eine lösbare mechanische Verbindung zwischen Last- und Hauptmodul, sodass diese aneinandergehalten bzw. mechanisch aneinander fixiert werden. Die elektrische Verbindung kann z. B. eine Steck- oder Kabelverbindung sein.

Die hydraulischen Kupplungen ermöglichen eine Verbindung der Strömungswege von Lastmodul und Hauptmodul. So werden über hydraulische Kupplungen die Abschnitte der Zulaufleitung in dem Lastmodul und dem Hauptmodul lösbar und dicht miteinander verbunden, sodass sie eine durchgängige Zulaufleitung bilden. Entsprechend oder alternativ kann ein Abschnitt einer Rücklaufleitung in dem Hauptmodul mit einem Abschnitt der Rücklaufleitung in dem Lastmodul über eine hydraulische Kupplung lösbar miteinander verbunden werden, sodass eine durchgehende Rücklaufleitung zwischen Haupt- und Lastmodul geschaffen wird. Es ist zu verstehen, dass das Hauptmodul zumindest einen Abschnitt der Zulaufleitung oder einen Abschnitt der Rücklaufleitung aufweist, wobei dieser Abschnitt entsprechend mit dem zugehörigen Abschnitt der Rücklaufleitung oder dem zugehörigen Abschnitt der Zulaufleitung in dem Lastmodul über eine hydraulische Verbindung verbunden ist. Bevorzugt weist auch das Hauptmodul sowohl einen Abschnitt der Zulaufleitung als auch einen Abschnitt der Rücklaufleitung auf, welche in der beschriebenen Weise über die hydraulischen Kupplungen mit den anschließenden Abschnitten der Zulauf- und der Rücklaufleitung in dem Lastmodul verbunden werden.

Die lösbare elektrische Kupplung, welche beispielsweise als Steckkupplung ausgebildet sein kann, stellt eine lösbare elektrische Verbindung zwischen dem Haupt- und Lastmodul her. Diese dient insbesondere der Energieversorgung der Reguliereinrichtung in dem Lastmodul. Bevorzugt sind sowohl die mechanische als auch die hydraulische und die elektrische Kupplung als Steckkupplungen ausgebildet, sodass das Lastmodul in einfacher Weise lösbar an das Hauptmodul angesteckt werden kann, wobei gleichzeitig eine mechanische Verbindung, die erforderlichen hydraulischen Verbindungen sowie die erforderliche elektrische Verbindung hergestellt werden. Dies ermöglicht eine sehr einfache Montage.

Das Lastmodul weist vorzugsweise an einem ersten Längsende erste hydraulische Kupplungen in Form einer ersten Rücklaufkupplung, welche mit dem Abschnitt der Rücklaufleitung im Inneren des Lastmoduls verbunden ist, und einer ersten Zulaufkupplung, welche mit dem Abschnitt der Zulaufleitung in dem Lastmodul verbunden ist, auf. Dieses erste Längsende ist dasjenige Längsende, an welchem die Verbindung zu dem Hauptmodul hergestellt wird, d. h. mit welchem das Lastmodul an eine Seite des Hauptmoduls angesetzt wird.

Vorzugsweise weist das Hauptmodul an einer dem Lastmodul zugewandten Seite bzw. einem dem Lastmodul zugewandten Längsende hydraulische Kupplungen auf, welche eine Zulaufkupplung und eine Rücklaufkupplung aufweisen und welche derart ausgestaltet sind, dass sie mit den ersten hydraulischen Kupplungen an dem Lastmodul in Eingriff treten können. Die Zulaufkupplung ist mit dem Abschnitt der Zulaufleitung in dem Hauptmodul und die Rücklaufkupplung mit dem beschriebenen Abschnitt der Rücklaufleitung in dem Hauptmodul verbunden. Wenn das Lastmodul an das Hauptmodul angesetzt wird, tritt die erste Zulaufkupplung des Lastmoduls mit der Zulaufkupplung an dem Hauptmodul in Verbindung und stellt eine dichte hydraulische Verbindung her, welche den Abschnitt der Zulaufleitung in dem Hauptmodul mit dem Abschnitt der Zulaufleitung in dem Lastmodul hydraulisch verbindet. Entsprechend tritt die Rücklaufkupplung an dem Hauptmodul mit der ersten Rücklaufkupplung an dem Lastmodul in dichte fluidleitende Verbindung, sodass ein durchgängiger Strömungsweg von dem Abschnitt der Rücklaufleitung in dem Lastmodul zu dem Abschnitt der Rücklaufleitung in dem Hauptmodul hergestellt wird. Die Zulaufkupplungen und die Rücklaufkupplungen sind vorzugsweise als Steckkupplungen ausgebildet und weisen erforderliche Dichtungen zur Abdichtung nach außen, beispielsweise O-Ringe, welche zwischen gegenüberliegenden Dichtflächen zur Anlage kommen, auf.

Weiter bevorzugt weist das Lastmodul an einem zweiten, dem ersten Längsende entgegengesetzten Längsende zwei hydraulische Kupplungen in Form einer zweiten Rücklaufkupplung, welche mit dem Abschnitt der Rücklaufleitung verbunden ist, und einer zweiten Zulaufkupplung, welche mit dem Abschnitt der Zulaufleitung im Inneren des Lastmoduls verbunden ist, auf, wobei die zweiten hydraulischen Kupplungen derart angeordnet und ausgestaltet sind, dass sie mit den ersten hydraulischen Kupplungen eines weiteren Lastmoduls in Eingriff treten können. Dies ermöglicht es, mehrere Lastmodule aneinander zu reihen und dabei hydraulische Verbindungen zwischen den Lastmodulen herzustellen. Dabei greift jeweils eine erste Zulaufkupplung eines Lastmoduls in die zweite Zulaufkupplung eines zweiten Lastmoduls ein, während gleichzeitig die erste Rücklaufkupplung des ersten Lastmoduls in die zweite Rücklaufkupplung des zweiten Lastmoduls eingreift. Der Abschnitt der Zulaufleitung im Inneren des Lastmoduls stellt somit vorzugsweise eine Verbindung zwischen der ersten und der zweiten Zulaufkupplung dieses Lastmoduls her, während der Abschnitt der Rücklaufleitung im Inneren des Lastmoduls die erste und die zweite Rücklaufkupplung dieses Lastmoduls hydraulisch miteinander verbindet. Auf diese Weise können mehrere Lastmodule in der Längsrichtung, in welcher das erste und das zweite Längsende voneinander abgewandt sind, aneinander gereiht werden, um gemeinsam einen hydraulischen Verteiler mit genau der gewünschten Zahl von Anschlüssen für Lastkreise, d. h Zulauf- und Rücklaufanschlüssen zu bilden. Da in jedes Lastmodul zusätzlich eine Reguliereinrichtung integriert ist, wird gleichzeitig die erforderliche Anzahl von Reguliereinrichtungen für die gewünschte Zahl von Lastkreisen angeordnet. Der erfindungsgemäße hydraulische Verteiler lässt sich so durch einfaches Aneinanderstecken einer gewünschten Zahl von Lastmodulen anpassen, um eine gewünschte Zahl von Lastkreisen versorgen und regeln zu können. Das letzte Lastmodul kann an seinem zweiten Längsende durch ein Abschlussmodul verschlossen sein, welches gegebenenfalls weitere hydraulische Bauteile, wie einen Entlüfter, aufweisen kann.

Weiter bevorzugt weist die Verteiler-Steuereinrichtung zumindest eine Kommunikationsschnittstelle zum Empfang von Signalen von einem externen Steuerelement, insbesondere einem Raumthermostat, auf. Besonders bevorzugt ist diese Kommunikationsschnittstelle so ausgebildet, dass sie mit mehreren Steuerelementen, d. h. insbesondere mehreren Raumthermostaten, kommunizieren kann. Beispielsweise können mehrere Lastkreise mit entsprechend mehreren Lastmodulen vorgesehen sein, wobei jeder Lastkreis beispielsweise zur Temperierung eines Raumes in einem Gebäude vorgesehen ist. Dabei wird bevorzugt ein Raumthermostat in jedem dieser Räume angeordnet, welcher die aktuelle Raumtemperatur erfasst und mit der Kommunikationsschnittstelle der Verteiler-Steuereinrichtung kommuniziert. Das Steuerelement in Form eines Raumthermostates kann darüber hinaus ausgebildet sein, um eine gewünschte Raumtemperatur vorwählen zu können. Bei Abweichung der tatsächlich erfassten Raumtemperatur von dem eingestellten Sollwert sendet der Raumthermostat dann ein Signal an die Kommunikationsschnittstelle, dass eine Temperierung des Raumes über den Lastkreis erforderlich ist. Die Verteiler-Steuereinrichtung veranlasst dann, dass der zugehörige Lastkreis eingeschaltet, d. h. geöffnet, wird. Dazu steuert die Verteiler-Steuereinrichtung die Reguliereinrichtung in dem zugehörigen Lastmodul für diesen Lastkreis so an, dass die Reguliereinrichtung den Lastkreis öffnet. D. h. beispielsweise wird ein Ventil von einer geschlossenen Position in eine geöffnete Position bewegt. Wenn als Reguliereinrichtung eine Umwälzpumpe vorgesehen ist, wird der Lastkreis durch Einschalten der Umwälzpumpe in Betrieb genommen bzw. eingeschaltet. Diese Ausgestaltung bedeutet somit, dass vorzugsweise einzelne Steuerelemente bzw. Raumthermostate nicht direkt mit zugehörigen Lastmodulen des hydraulischen Verteilers kommunizieren, sondern bevorzugt mit der zentralen Verteiler-Steuereinrichtung, welche dann ihrerseits die Lastmodule bzw. die in den Lastmodulen angeordneten Reguliereinrichtungen steuert. Auf dies Weise vereinfacht sich wiederum der Aufbau, da die gesamte Kommunikation und Steuerung durch die Verteiler-Steuereinrichtung ausgeführt werden kann.

Besonders bevorzugt sind die hydraulischen Kupplungen jeweils als Steckkupplungen mit einem männlichen Kupplungsteil und einem korrespondierenden weiblichen Kupplungsteil ausgebildet, wobei bei der Kupplung der männliche Kupplungsteil in den weiblichen Kupplungsteil eingreift. Diese Ausgestaltung ermöglicht die Verwendung einer radialen Dichtung. Darüber hinaus kann eine gewisse Führung beim Zusammenstecken der Kupplung durch das Ineinandergreifen gegeben sein. Es ist möglich, dass die hydraulischen Kupplungen an dem Hauptmodul als männliche Kupplungsteile und die ersten hydraulischen Kupplungen an dem Lastmodul als weibliche Kupplungsteile oder umgekehrt ausgebildet sind. Das Lastmodul weist, wenn es hydraulische Kupplungen an zwei entgegengesetzten Seiten aufweist, an einer Seite jeweils einen männlichen Kupplungsteil und an der entgegengesetzten Seite einen korrespondierenden weiblichen Kupplungsteil. Bei der Anordnung von Rücklaufkupplung und Zulaufkupplung ist es möglich, dass an einer Seite beide dieselbe Gestalt haben, d. h. beide als männlicher Kupplungsteil oder als weiblicher Kupplungsteil ausgebildet sind. Auch ist es möglich, an einer Seite beispielsweise die Rücklaufkupplung als weiblichen Kupplungsteil und die Zulaufkupplung als männlichen Kupplungsteil oder umgekehrt auszubilden.

Das Lastmodul weist vorzugsweise an einem ersten Längsende zumindest einen ersten elektrischen Steckkontakt als Teil einer elektrischen Kupplung auf, wobei an dem Hauptmodul an einer dem Lastmodul zugewandten Seite ein korrespondierender zweiter elektrischer Stecckontakt ausgebildet ist, welcher mit dem ersten Steckkontakt des Lastmoduls lösbar in Kontakt bringbar ist. Der erste und der zweite elektrische Steckkontakt können als männlicher und weiblicher Steckkontakt ausgebildet sein, welche ineinandergreifen. Alternativ können auch in anderer Weise in Kontakt kommende Steckkontakte Verwendung finden. Die elektrischen Steckkontakte können ein- oder mehrpolig ausgebildet sein. Bevorzugt sind sie mehrpolig ausgebildet, um so eine Energieversorgung für die Reguliereinrichtungen und gegebenenfalls eine Datenübertragung von Sensoren oder weiteren elektronischen Bauteilen zu ermöglichen.

Weiter bevorzugt weist das Lastmodul an einem zweiten dem ersten Längsende entgegengesetzten zweiten Längsende einen zweiten elektrischen Steckkontakt auf, welcher mit einem ersten elektrischen Steckkontakt an einem ersten Längsende eines zweiten Lastmoduls lösbar in Kontakt bringbar ist. Dieser zweite elektrische Steckkontakt entspricht in seiner Ausgestaltung dem zweiten elektrischen Steckkontakt an dem Hauptmodul. Dies ermöglicht es, bei Aneinanderreihung mehrerer Lastmodule diese elektrisch miteinander zu kontaktieren. Dabei können alle Lastmodule gleich ausgebildet sein und es ist möglich, ein Lastmodul entweder an das Hauptmodul anzusetzen oder in Längsrichtung an ein vorangehendes Lastmodul anzusetzen. So kann eine gewünschte Zahl von Lastmodulen zusammengefügt und miteinander kombiniert werden, um eine gewünschte Zahl von Lastkreisen anschließen und versorgen zu können.

Weiter bevorzugt sind in dem zumindest einen Lastmodul der erste und der zweite elektrische Steckkontakt elektrisch, insbesondere nach Art eines Datenbusses, miteinander verbunden. Diese Ausgestaltung ermöglicht es, mehrere Lastmodule elektrisch in Reihe zu schalten bzw. aneinander zu fügen, wobei eine Energieversorgung und/oder eine Datenübertragung durch die aneinandergefügten Lastmodule hindurch zu den nachfolgenden Lastmodulen möglich wird. Ein Datenbus hat den Vorteil, dass dieser es ermöglicht, eine Vielzahl von Lastmodulen miteinander zu kombinieren bzw. aneinander zu fügen, ohne dass sich dadurch die Zahl der erforderlichen Leiter in den elektrischen Verbindungen erhöht. Darüber hinaus können alle Lastmodule identisch ausgestaltet und in beliebiger Reihenfolge aneinandergefügt werden. Die Lastmodule weisen vorzugsweise eine Kommunikationseinheit auf, welche die Kommunikation mit der Verteiler-Steuereinrichtung übernimmt. Dabei sind die Kommunikationseinheit und die Verteiler-Steuereinrichtung vorzugsweise so ausgebildet, dass diese sich selbsttätig koppeln. D. h. beide tauschen Adressen miteinander aus und stellen eine Kommunikationsverbindung her, sodass jedes Lastmodul von der Verteiler-Steuereinrichtung eindeutig adressiert werden kann. Dazu kann jedes Lastmodul eine feste individuelle Adresse aufweisen. Bevorzugt jedoch erkennt die Verteiler-Steuereinrichtung, wenn ein neues Lastmodul direkt mit dem Hauptmodul oder einem bereits an das Hauptmodul angesteckten Lastmodul verbunden wird. Die Verteiler-Steuereinrichtung ist dazu so ausgebildet, dass sie dann eine Adresse an das neu angeschlossene Lastmodul bzw. dessen Kommunikationseinheit vergibt, sodass dieses Lastmodul und dessen Kommunikationseinheit dann eindeutig adressiert werden können, um über die Kommunikationseinheiten die Reguliereinrichtung in dem zugehörigen Lastmodul steuern zu können. Entsprechend kann auch ein Datenaustausch von Sensoren in dem Lastmodul über die Kommunikationseinheit zu der Verteiler-Steuereinrichtung erfolgen. Die Kommunikation erfolgt dabei bevorzugt über einen elektrischen Datenbus. Es ist jedoch auch eine Kommunikation über eine optische Signalverbindung oder beispielsweise über eine Funkverbindung denkbar. Für den Datenbus können separate elektrische Leitungen verwendet werden. Alternativ kann die Kommunikation auch über die der Energieversorgung der Reguliereinrichtungen dienenden elektrischen Leiter erfolgen.

Gemäß einer weiteren bevorzugten Ausführungsform ist die Reguliereinrichtung in dem Lastmodul mit dem ersten elektrischen Steckkontakt zur Energieversorgung verbunden. So wird die Reguliereinrichtung über den Steckkontakt mit Energie versorgt. Dies kann direkt geschehen oder über ein zwischengeschaltetes Steuerelement oder eine zwischengeschaltete Kommunikationseinheit, welche Steuersignale über einen Datenbus empfängt. Die Steuereinheit oder Kommunikationseinheit stellt dann die Verbindung zu der Energieversorgung zur gezielten Ansteuerung der Reguliereinrichtung her.

Besonders bevorzugt weist das zumindest eine Lastmodul eine elektronische Modul-Steuereinrichtung auf, welche elektrisch mit dem ersten Steckkontakt und der Reguliereinrichtung verbunden ist und zur Kommunikation mit der Verteiler-Steuereinrichtung in dem Hauptmodul sowie zur Ansteuerung der Reguliereinrichtung ausgebildet ist. Die Modul-Steuereinrichtung übernimmt somit die Funktion der vorangehend beschriebenen Kommunikationseinheit bzw. der beschriebenen Steuereinheit. Sie dient vorzugsweise der eindeutigen Adressierung des Lastmoduls und der Ansteuerung der Reguliereinrichtung in dem Lastmodul von der Verteiler-Steuereinrichtung.

Dabei sind die Modul-Steuereinrichtung des zumindest einen Lastmoduls und die Verteiler-Steuereinrichtung bevorzugt über einen Datenbus miteinander verbunden und vorzugsweise zur automatischen Kommunikations-Kopplung ausgebildet. Der Datenbus ist vorzugsweise ein elektrischer Datenbus, welcher über die Steckkontakte miteinander verbunden wird. D. h. in dem jeweiligen Lastmodul verläuft der Datenbus von dem ersten zu dem zweiten beschriebenen Steckkontakt. Die automatische Kommunikations-Kopplung kann in der oben beschriebenen Weise, beispielsweise durch Empfang einer Adresse von der Verteiler-Steuereinrichtung, erfolgen. Dies ermöglicht es, dass die Module einfach zusammengefügt werden können und die Kommunikations-Kopplung weitgehend automatisch erfolgt. Gegebenenfalls können an den Lastmodulen und/oder an dem Hauptmodul Betätigungselemente angeordnet sein, über welche ein Nutzer den Kopplungs-Vorgang manuell starten kann.

Gemäß einer weiteren bevorzugten Ausführungsform ist in dem Lastmodul zumindest ein Temperatursensor derart angeordnet, dass er die Temperatur eines durch den Rücklaufanschluss strömenden Fluids erfasst, wobei der Temperatursensor vorzugsweise mit der Verteiler-Steuereinrichtung signalverbunden ist. Diese Signalverbindung kann ebenfalls über eine Modul-Steuereinrichtung oder eine Kommunikationseinheit geschehen. Insbesondere erfolgt die Datenübertragung ebenfalls über den beschriebenen Datenbus. Die Erfassung der Temperatur im Rücklauf des Lastkreises ist zur Regelung des jeweiligen Lastkreises von Vorteil, wobei die Regelung bevorzugt für alle Lastkreise zentral von der Verteiler-Steuereinrichtung in dem Hauptmodul übernommen wird.

Zweckmäßigerweise weist das zumindest eine Lastmodul an einem ersten Längsende zumindest eine erste mechanische Kupplung und das Hauptmodul an einer dem Lastmodul zugewandten Seite zumindest eine zweite mechanische Kupplung auf, welche lösbar mit der ersten mechanischen Kupplung verbindbar ist. Dies kann eine Steckkupplung sein. Die lösbare Verbindung kann bevorzugt über lösbare Rast- und/oder Klemmelemente oder zusätzliche Sicherungselemente wie Sicherungsbügel oder Sicherungsstifte, welche nach erfolgter Verbindung von Last- und Hauptmodul in die Kupplung eingesetzt werden, erfolgen. Bevorzugt ist die Kupplung so ausgestaltet, dass sie ohne spezielles Werkzeug zusammenfüg- und wieder trennbar ist. Die mechanischen Kupplungen sorgen dafür, dass das Lastmodul an dem Hauptmodul gehalten wird und/oder dass das Hauptmodul an dem Lastmodul gehalten wird. Dies vermeidet es, dass alle Lastmodule und das Hauptmodul einzeln an einer separaten Trägerstruktur befestigt werden müssen. Weiter bevorzugt weisen alle Lastmodule und das Hauptmodul Befestigungsmittel auf, welche eine Befestigung an einer externen Trägerstruktur, beispielsweise auch einer Wand ermöglichen. Dabei ist es bevorzugt, dass zur Befestigung nicht alle Befestigungsmittel genutzt werden müssen, da über die mechanischen Kupplungen beispielsweise ein Lastmodul mit dem Hauptmodul bevorzugt tragend verbunden wird.

Weiter bevorzugt weist das zumindest eine Lastmodul an einem zweiten Längsende zumindest eine zweite mechanische Kupplung auf, welche lösbar mit einer ersten mechanischen Kupplung an einem ersten Längsende eines zweiten Lastmoduls verbindbar ist. Dabei ist die zweite mechanische Kupplung bevorzugt identisch zu der mechanischen Kupplung an dem Hauptmodul ausgebildet. So können alle Lastmodule gleich ausgebildet sein und entweder mit dem Hauptmodul oder mit einem angrenzenden Lastmodul mechanisch verbunden werden.

Die mechanischen Kupplungen zwischen dem Hauptmodul und einem angrenzenden Lastmodul bzw. zwischen einzelnen Lastmodulen stellen darüber hinaus sicher, dass die beschriebenen hydraulischen und elektrischen Kupplungen sicher in Eingriff gehalten werden.

Gemäß einer weiteren bevorzugten Ausführungsform ist zumindest derjenige Teil des Lastmoduls, in welchem der Abschnitt der Zulaufleitung, der Abschnitt der Rücklaufleitung sowie der Zulauf- und der Rücklaufanschluss gelegen sind, als einstückiges Bauteil, vorzugsweise aus einem Kunststoff, ausgebildet. Ein solches Bauteil kann kostengünstig im Spritzgussverfahren gefertigt werden. Bevorzugt werden lediglich die elektrischen bzw. elektronischen Bauelemente, die Reguliereinrichtungen, insbesondere in Form von Regulierventilen, sowie Dichtungen in ein solches einstückig gefertigtes Bauteil eingesetzt. Besonders bevorzugt sind auch die mechanischen Kupplungen sowie die hydraulischen Kupplungen sowie die tragenden Elemente der elektrischen Kupplungen ebenfalls einstückig mit den beschriebenen Teilen des Lastmoduls, vorzugsweise aus Kunststoff gefertigt. Bei dem Hauptmodul ist vorzugsweise derjenige Teil, welcher mit einem angrenzenden Lastelement in Eingriff tritt, d. h. die elektrischen, hydraulischen und mechanischen Kupplungen trägt, einstückig aus Kunststoff gefertigt. Besonders bevorzugt sind diese Teile einstückig mit einem Pumpengehäuse für eine in dem hydraulischen Verteiler angeordnete Umwälzpumpe gefertigt.

Ferner ist es möglich, mehrere hydraulische Verteiler gemäß der vorangehenden Beschreibung miteinander zu kombinieren. So könnte beispielsweise als erste Anordnung ein erster hydraulischer Verteiler mit einem Hauptmodul und mehreren Lastmodulen vorgesehen sein und zumindest eine weitere Anordnung von mehreren Lastmodulen vorgesehen sein, welche von der ersten Anordnung räumlich beabstandet ist und über geeignete Rohrleitungen mit der ersten Anordnung verbunden ist. Eine elektrische Verbindung könnte dabei über ein Verbindungskabel erfolgen. Alternativ könnte für die zweite Anordnung von Lastmodulen eine eigene Energieversorgung und ein Kommunikationsmodul zur drahtlosen Kommunikation mit der Verteiler- Steuereinrichtung in dem Hauptmodul vorgesehen sein. Auch ist es denkbar, in der zweiten Anordnung von Lastmodulen eingangsseitig ein Mischermodul vorzusehen, über welches eine Temperatureinstellung der Vorlauftemperatur für die zweite Anordnung von zweiten Lastmodulen unabhängig von der Vorlauftemperatur für die erste Anordnung von Lastmodulen möglich ist. Dabei wird dieses Mischmodul vorzugsweise ebenfalls von der Verteiler-Steuereinrichtung in dem Hauptmodul angesteuert.

Nachfolgend wird die Erfindung beispielhaft anhand der beigefügten Figuren beschrieben, in diesen zeigt:
- Fig. 1: einen hydraulischen Verteiler gemäß der Erfindung im nicht zusammengesetzten Zustand,
- Fig. 2: schematisch den hydraulischen Verteiler gemäß Fig. 1 im zusammengesetzten Zustand,
- Fig. 3: eine perspektivische Ansicht eines Hauptmoduls des erfindungsgemäßen hydraulischen Verteilers,
- Fig. 4: eine schematische Ansicht eines Lastmoduls des erfindungsgemäßen hydraulischen Verteilers,
- Fig. 5: eine perspektivische Ansicht des hydraulischen Verteilers mit dem Hauptmodul gemäß Fig. 3 und dem Lastmodul gemäß Fig. 4, und
- Fig. 6: eine Draufsicht auf den hydraulischen Verteiler gemäß Fig. 5.

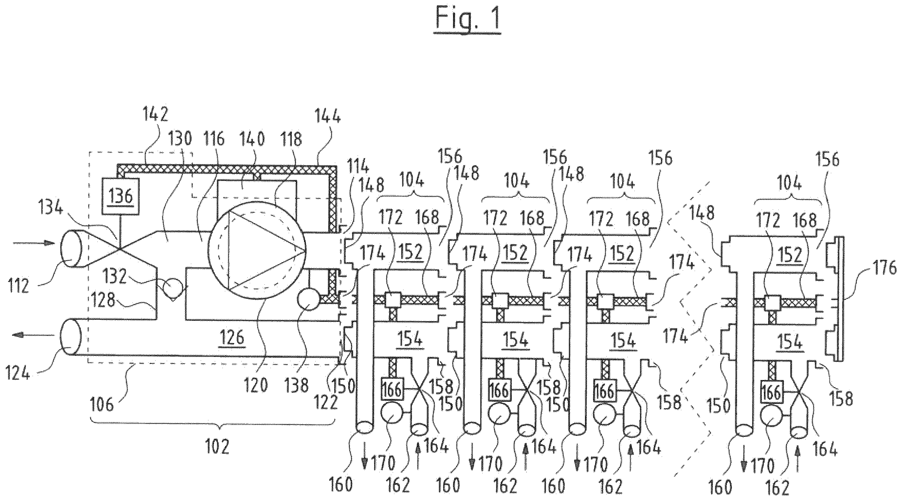

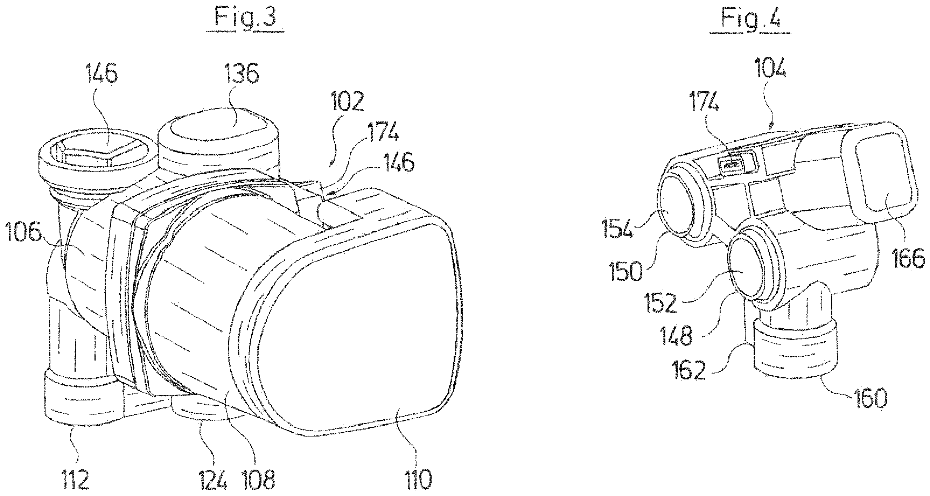

Der in den Figuren 1 - 6 gezeigte hydraulische Verteiler ist modular aufgebaut und besteht im Wesentlichen aus zwei Arten von Modulen, einem Hauptmodul 102 sowie mehreren Lastmodulen 104. Das Hauptmodul 102 ist im Wesentlichen von einem Pumpenaggregat gebildet. Wie in Fig. 3 gezeigt, weist das Pumpenaggregat ein Pumpengehäuse 106 mit einem daran angeordneten Statorgehäuse 108 auf. In dem Pumpengehäuse 106 sind die erforderlichen Strömungswege sowie ein Aufnahmeraum 120 für ein Laufrad 118 ausgebildet. Das Laufrad 118 wird von einem elektrischen Antriebsmotor angetrieben, welcher in dem Motor- bzw. Statorgehäuse 108 angeordnet ist. Dabei ist der elektrische Antriebsmotor vorzugsweise als nasslaufender Motor ausgebildet. An der Außenseite des Statorgehäuses 108 ist am axialen Ende ein Elektronikgehäuse 110 angeordnet, in welchem unter anderem die elektronischen Bauteile zur Steuerung bzw. Regelung des elektrischen Antriebsmotors in dem Statorgehäuse 108 untergebracht sind.

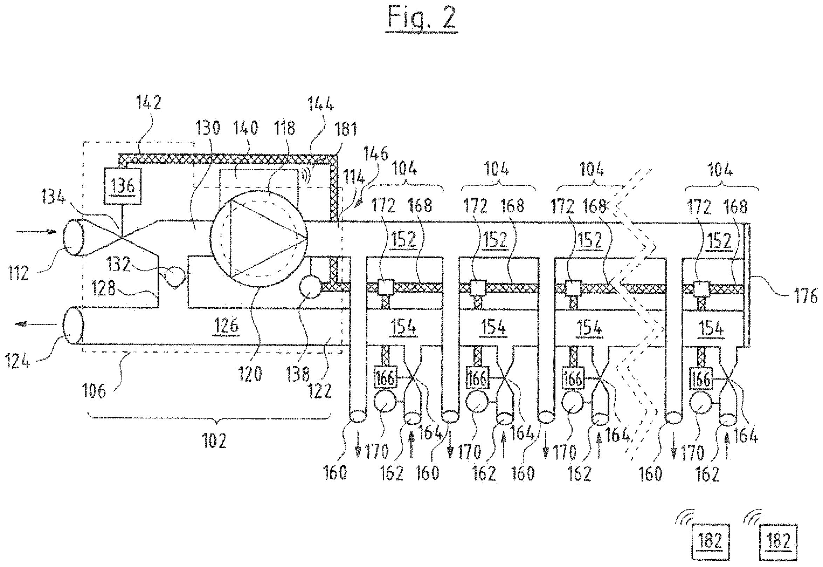

Das in Fig. 3 gezeigte Umwälzpumpenaggregat bildet das Hauptmodul 102. Bei diesem Umwälzpumpenaggregat sind in dem Pumpengehäuse 106 neben dem Laufrad die Komponenten einer Mischeinrichtung, deren Funktion anhand der Figuren 1 und 2 beschrieben wird, untergebracht. Das Pumpengehäuse weist einen ersten Einlass 112 sowie einen ersten Auslass 114 auf. In einem ersten Strömungsweg 116 zwischen dem ersten Einlass 112 und dem ersten Auslass 114 liegt die Umwälzpumpe mit dem Laufrad 118. Das Laufrad 118 liegt in einem Aufnahmeraum 120 im Inneren des Pumpengehäuses 106, welches in den Figuren 1 und 2 als gestrichelte Linie schematisch dargestellt ist. Das Laufrad 118 fördert angetrieben durch den Antriebsmotor ein als Wärmeträger fungierendes Fluid, d. h. eine Flüssigkeit von dem ersten Einlass 112 zu dem ersten Auslass 114.

Das Pumpengehäuse 106 weist darüber hinaus einen zweiten Einlass 122 sowie einen zweiten Auslass 124 auf. Der zweite Einlass 122 ist mit dem zweiten Auslass 124 über einen Kanal 126, welcher einen Strömungsweg im Inneren des Pumpengehäuses 106 bildet, verbunden. Der Kanal 126 führt nicht durch das Laufrad 118, sondern erstreckt sich separat in dem Pumpengehäuse 106. Der Kanal 126 ist über eine Verbindung 128 mit einem Mischbereich bzw. Mischpunkt 130 in dem Strömungsweg 116 verbunden. An dem Mischpunkt 130 werden die Fluidströmungen von dem ersten Einlass 112 und dem zweiten Einlass 122 gemischt. Da das Laufrad 118 stromabwärts des Mischpunktes 130 gelegen ist, saugt es Fluid sowohl aus dem ersten Einlass 112 als auch über die Verbindung 128 aus dem Kanal 126 und damit dem zweiten Einlass 122 an. In der Verbindung 128 ist ein Rückschlagventil 132 angeordnet, welches eine Strömung nur in der Richtung von dem Kanal 126 zu dem Mischpunkt 130 zulässt.

In dem Strömungsweg von dem ersten Einlass 112 zu dem Mischpunkt 130 ist ein Regulierventil 134 angeordnet. Dies ist über einen elektrischen Antriebsmotor 136 in seinem Öffnungsgrad einstellbar. Das Regulierventil 134 fungiert als Mischventil, um das Mischungsverhältnis der zwei genannten Strömungen an dem Mischpunkt 130 einstellen zu können. Wenn das Regulierventil 134 geschlossen ist, kann keine Strömung von dem ersten Einlass 112 zu dem Mischpunkt 130 erfolgen und die Umwälzpumpe saugt über deren Laufrad 118 Fluid ausschließlich über den zweiten Einlass 122 durch den Kanal 126 und die Verbindung 128 an. Wenn das Regulierventil 134 geöffnet wird, wird ein Teil der Strömung durch das Pumpenaggregat durch den ersten Einlass 112 angesaugt, sodass in dem Mischpunkt 130 eine Strömung aus dem ersten Einlass 112 mit einer Strömung aus dem zweiten Einlass 122 gemischt wird. Je nach Öffnungsgrad des Regulierventils 134 ändert sich das Mischungsverhältnis. Wenn nun der erste Einlass 112 an einen Zulauf eines Heizungssystems angeschlossen ist, durch welchen heißes Fluid zugeführt wird und der zweite Einlass 122 an einen Rücklauf zumindest eines Lastkreises angeschlossen ist, wird durch den zweiten Einlass 122 kälteres Fluid zugeführt und zugemischt. Durch die Zumischung des kälteren Fluids aus dem zweiten Einlass 122 zu dem wärmeren Fluid aus dem ersten Einlass 112 ist es somit möglich, die Vorlauftemperatur des aus dem ersten Auslass 114 stromabwärts des Mischpunktes 130 austretenden Fluids gegenüber der Temperatur des in den ersten Einlass 112 eintretenden Fluids zu reduzieren. Die tatsächlich erreichte Vorlauftemperatur an dem ersten Auslass 114 wird über einen Temperatursensor 138, welcher ebenfalls in das Umwälzpumpenaggregat bzw. dessen Pumpengehäuse 106 integriert ist, erfasst. Es ist zu verstehen, dass das Regulierventil 134 anstatt in dem Strömungsweg zwischen dem ersten Einlass 112 und dem Mischpunkt 130 auch in entsprechender Weise zwischen dem zweiten Auslass 124 und dem Abzweig der Verbindung 128 von dem Kanal 126 angeordnet werden könnte.

Für den Fall, dass der gezeigte hydraulische Verteiler für ein Kühlsystem verwendet wird, kann durch den ersten Einlass 112 ein kaltes Fluid zugeführt werden, während über den zweiten Einlass 122 aus dem Rücklauf eines Lastkreises wärmeres Fluid zugeführt wird. So ist es durch die Zumischung dieses wärmeren Fluids an dem Mischpunkt 130 möglich, die Vorlauftemperatur des zugeführten kalten Fluids zu erhöhen. Durch die Einstellung des Mischungsverhältnisses kann auch hier die Temperatur auf eine gewünschte Solltemperatur eingestellt werden.

Die Regelung bzw. Steuerung dieser Mischeinrichtung, d. h. die Temperaturregelung wird von einer Steuereinrichtung 140 übernommen, welche in dem Elektronikgehäuse 110 des Umwälzpumpenaggregates 102 angeordnet ist. Die Steuereinrichtung 140 steuert den Motor 136 des Regulierventils 134 an, sodass dieses einen von der Steuereinrichtung 140 vorgegebenen Öffnungsgrad einnimmt. Dazu ist der Motor 136 des Regulierventils 134 über eine Signalverbindung 142, welche beispielsweise als Datenbus ausgebildet sein kann, mit der Steuereinrichtung 140 verbunden. Auch der Temperatursensor 138 ist über eine Signalverbindung 144 mit der Steuereinrichtung 140 verbunden. So kann die Steuereinrichtung 140 durch Einstellung des Regulierventiles 134 die Zumischung des Fluids aus dem Rücklauf an dem Mischpunkt 130 regulieren und so eine gewünschte Vorlauftemperatur einstellen, wobei über den Temperatursensor 138 eine entsprechende Rückmeldung an die Steuereinrichtung 140 erfolgt, welche eine Temperaturregelung ermöglicht.

Alle die in den Figuren 1 und 2 gezeigten und beschriebenen hydraulischen Komponenten der Mischeinrichtung sowie das Laufrad 118 des Umwälzpumpenaggregates sind in dem Pumpengehäuse 106 angeordnet. Das Pumpengehäuse 106 ist mit allen seinen Teilen, in denen die beschriebenen Strömungswege ausgebildet sind, vorzugsweise einstückig aus Kunststoff gefertigt. So kann eine sehr einfache Verbindung zwischen der beschriebenen Mischeinrichtung und den Komponenten der Umwälzpumpe erreicht werden, da alle Komponenten in ein einstückiges Gehäuse 106 integriert sind. Dadurch wird ein sehr kompakter Aufbau bei gleichzeitig einfacher Montage erreicht. In dem Pumpengehäuse 106 ist zusätzlich ein Entlüftungsventil 146 angeordnet, welches in Figuren 1 und 2 nicht dargestellt ist.

Die zuvor beschriebene Mischeinrichtung dient in dem hier gezeigten Beispiel des hydraulischen Verteilers als Mischeinrichtung für eine Fußbodenheizung. Der hydraulische Verteiler ist als Verteiler für eine Fußbodenheizungsanlage ausgestaltet. Die Mischeinrichtung dient somit dazu, die Temperatur eines Heizmediums auf die für die Fußbodenheizung erforderliche Temperatur abzusenken. Dies erfolgt durch Zumischung des kälteren Fluids aus dem Rücklauf, wie es vorangehend beschrieben wurde.

Der hier gezeigte hydraulische Verteiler, welcher zur Verwendung als Verteiler für ein Fußbodenheizungssystem vorgesehen ist, ist darüber hinaus modular aufgebaut. An einer Seite 146 des Hauptmoduls 102, d. h. des Umwälzpumpenaggregates 102, sind der erste Auslass 114 sowie der zweite Einlass 122 als hydraulische Kupplungen ausgebildet, in welche eine Zulaufkupplung 148 sowie eine Rücklaufkupplung 150 des Lastmoduls 104, welches angrenzend an das Hauptmodul 102 angeordnet ist, eingreifen. In dem Lastmodul 104 sind ein Abschnitt einer Zulaufleitung 152 sowie ein Abschnitt einer Rücklaufleitung 154 ausgebildet. Der Abschnitt der Zulaufleitung 152 verbindet die erste Zulaufkupplung 148 mit einer am entgegengesetzten Längsende des Lastmoduls 104 gelegenen zweiten Zulaufkupplung 156. Entsprechend verbindet der Abschnitt der Rücklaufleitung 154 die erste Rücklaufkupplung 150 mit einer am entgegengesetzten Längsende des Lastmoduls 104 gelegenen zweiten Rücklaufkupplung 158. Die erste Zulaufkupplung 148 sowie die erste Rücklaufkupplung 150 sind als männliche Kupplungsteile ausgebildet, welche in die zweite Zulaufkupplung 156 sowie zweite Rücklaufkupplung 158, welche als weibliche Kupplungsteile ausgebildet sind, eines angrenzenden Lastmoduls 104 eingreifen können, um eine fluidleitende Verbindung zwischen aneinander angrenzenden Abschnitten 152 der Zulaufleitung sowie aneinander angrenzenden Abschnitten der Rücklaufleitung 154 zu bilden. Der erste Auslass 114 an dem Hauptmodul 102 ist entsprechend der zweiten Zulaufkupplung 156 als weibliche Kupplung ausgebildet, sodass die erste Zulaufkupplung 148 des angrenzenden Lastmoduls 104 in fluidleitende Verbindung mit dem ersten Auslass 114 treten kann. Entsprechend ist der zweite Einlass 122 ebenfalls als weibliche hydraulische Kupplung ausgebildet, deren Ausgestaltung derjenigen der zweiten Rücklaufkupplung 158 entspricht, sodass die erste Rücklaufkupplung 150 des angrenzenden Lastmoduls 140 zur Herstellung einer hydraulischen Verbindung mit dem zweiten Einlass 122 in Eingriff treten kann.

Der Abschnitt der Zulaufleitung 152 jedes Lastmoduls weist einen Zulaufanschluss 160 auf. Ferner weist in jedem Lastmodul der Abschnitt der Rücklaufleitung 154 einen Rücklaufanschluss 162 auf. An dem Zulaufanschluss 160 jedes Lastmoduls 104 wird der Eingang eines Lastkreises und an den Rücklaufanschluss 162 jedes Lastmoduls 104 der Ausgang des zugehörigen Lastkreises angeschlossen. Die Lastkreise bilden hier jeweils einzelne Kreise einer Fußbodenheizungsanlage, wobei jeder Kreis vorzugsweise einen Raum beheizt.

In jedem Lastmodul 104 ist darüber hinaus zwischen dem Rücklaufanschluss 162 und dem Abschnitt der Rücklaufleitung 154 im Strömungsweg ein Regulierventil 164 angeordnet. Jedes Regulierventil 162 weist einen elektrischen Antriebsmotor 166 auf, durch welchen das zugehörige Regulierventil 164 in seinem Öffnungsgrad verstellbar ist. Die Regulierventile 164 sind darüber hinaus so ausgebildet, dass sie vollständig geschlossen werden können. Durch dieses vollständige Schließen ist es möglich den angeschlossenen Lastkreis zu unterbrechen bzw. abzuschalten. Ist das Regulierventil 164 geöffnet, lässt sich durch Verändern des Öffnungsgrades über den Antriebsmotor 166 der Durchfluss bzw. Volumenstrom durch den Lastkreis, welcher an den Zulaufanschluss 160 bzw. an den Rücklaufanschluss 162 angeschlossen ist, regulieren. Da in jedem Lastmodul eine derartige Reguliereinrichtung mit einem Regulierventil 164 angeordnet ist, lässt sich für jeden Lastkreis im Betrieb der Anlage der Durchfluss variieren und an den jeweiligen Betriebszustand, insbesondere den Energiebedarf des Lastkreises anpassen. Die Antriebsmotoren 166 sind über eine elektrische Verbindung 168 in jedem Lastmodul 104, welche der Energieversorgung und der Datenübertragung dient, mit der Steuereinrichtung 140, welche als Verteiler-Steuereinrichtung fungiert, verbunden. In den Lastmodulen 104 ist darüber hinaus jeweils ein Temperatursensor 104 in dem Strömungsweg zwischen dem Rücklaufanschluss 152 und dem Abschnitt 154 der Rücklaufleitung angeordnet. Der Temperatursensor 170 erfasst die Rücklauftemperatur am Ausgang des angeschlossenen Lastkreises. Die Temperatursensoren 170 sind jeweils ebenfalls mit der elektrischen Verbindung 168, welche einen Datenbus aufweist bzw. bildet, verbunden.

Zur Datenübertragung bzw. Kommunikation mit der Steuereinrichtung 140 weisen die Lastmodule 104 jeweils eine Modulsteuereinrichtung 172 auf. Die Modulsteuereinrichtungen 172 ermöglichen eine Adressierung der einzelnen Lastmodule 104 von der Steuereinrichtung 140. Die Steuereinrichtung 140 und die Modulsteuereinrichtung 172 sind vorzugsweise zur automatischen Kopplung ausgebildet. So weist die Steuereinrichtung 140 bevorzugt den Modulsteuereinrichtungen 172 und damit den zugehörigen Lastmodul 104 jeweils eine Adresse zu, sodass die Steuereinrichtung 140 zum einen gezielt Daten von dem jeweiligen Lastmodul 104, beispielsweise Temperaturwerte von dem Temperatursensor 170, erfassen kann und gleichzeitig gezielt den Antriebsmotor 166 zur Einstellung des Regulierventils 164 ansteuern kann. Bevorzugt wird für jedes Lastmodul 104 von der Steuereinrichtung 140 der Durchfluss durch den angeschlossenen Lastkreis über das Regulierventil 164 in Abhängigkeit der Temperaturdifferenz zwischen den Temperatursensoren 138 und 170 eingestellt, sodass die Temperaturdifferenz einen konstanten vorgegebenen Wert annimmt. Zur Herstellung der elektrischen Verbindung bzw. der Datenverbindung zwischen den einzelnen Lastmodulen 104 sind elektrische Steckkupplungen 174 zwischen den einzelnen Lastmodulen 104 vorgesehen. Dazu sind entsprechende Teile der elektrischen Stecckupplungen 174 an entgegengesetzten Längsenden der Lastmodule 104 vorgesehen, welche jeweils mit der elektrischen Steckkupplung 174 eines angrenzenden Lastmoduls 104 in Eingriff treten können. Entsprechend ist eine elektrische Steckkupplung 174 zwischen dem Hauptmodul 102 und dem angrenzenden Lastmodul 104 vorhanden.

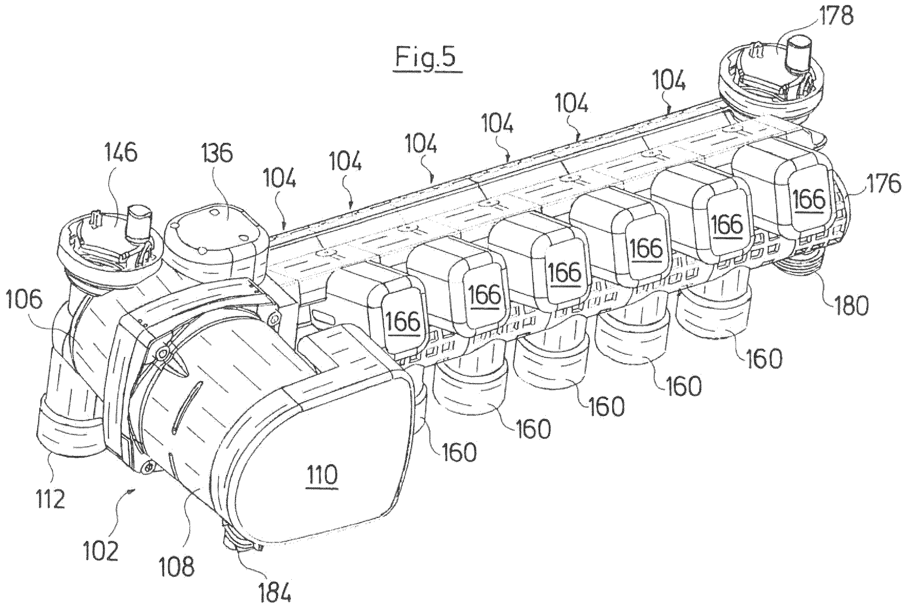

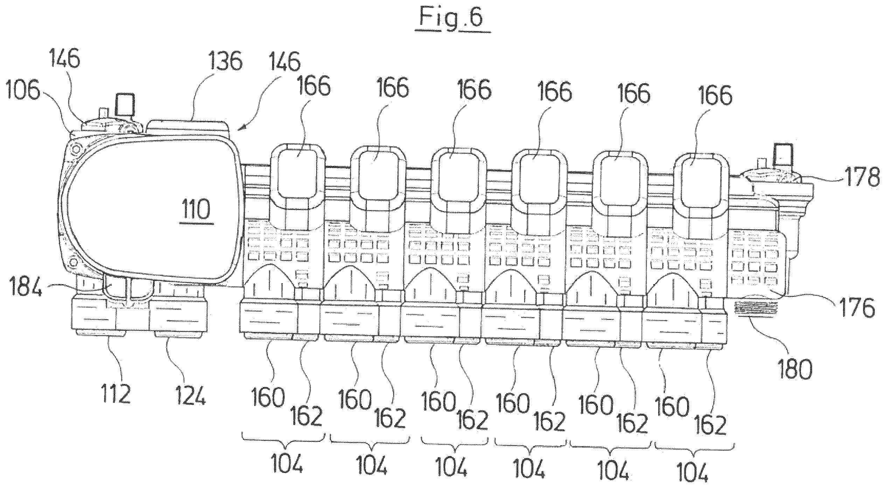

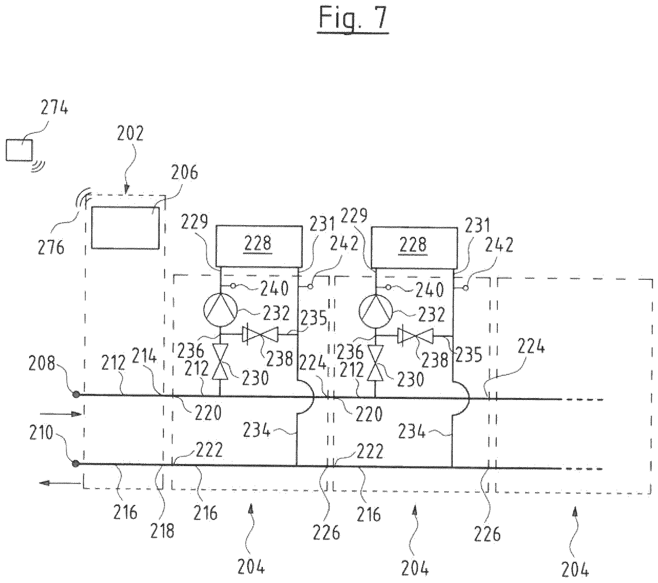

Durch die Ausgestaltung der elektrischen und hydraulischen Kupplungen zwischen den Lastmodulen 104 sowie zwischen dem Lastmodul 104 und dem Hauptmodul 102 ist es möglich, eine gewünschte Anzahl von Lastmodulen 104 mit dem Hauptmodul 102 zu verbinden, je nachdem wie viel Lastkreise angeschlossen werden sollen. So ist eine flexible Anpassung an verschiedene Heizungs- bzw. Kühlsysteme möglich und es ist nicht erforderlich jeweils für bestimmte Anzahlen von Lastkreisen vorgefertigte Verteiler bereitzuhalten. Vielmehr kann ein hydraulischer Verteiler der gewünschten Größe sehr einfach durch das Zusammenstecken der entsprechenden Zahl von Lastmodulen 104 aufgebaut werden, wie es in Figur 2 gezeigt ist. Das letzte, dem Hauptmodul 102 abgewandte Lastmodul 104 wird dabei an seinem freien, d. h. dem letzten angrenzendem Lastmodul 104 abgewandten Ende durch ein Endstück 176 abgeschlossen. Das Endstück 176 dient insbesondere dem Verschluss der zweiten Zulaufkupplung 156 sowie der zweiten Rücklaufkupplung 158 am Ende, sodass der Abschnitt der Zulaufleitung 152 und der Abschnitt der Rücklaufleitung 154 am freien Ende nach außen abgedichtet wird. In dem in Figur 6 gezeigten Beispiel weist das Endstück 176 darüber hinaus noch ein Entlüftungsventil 178 sowie einen Anschluss 180 auf, welcher mit der Rücklaufleitung 154 verbunden ist und beispielsweise zum Befüllen oder zum Spülen genutzt werden kann. Im normalen Betrieb ist dieser Anschluss 180 verschlossen. In den in Figuren 5 und 6 gezeigten Beispielen sind sechs Lastmodule 104 für sechs Lastkreise an das Hauptmodul 102 angefügt.

Neben den beschriebenen hydraulischen und elektrischen Verbindungen wird auch eine mechanische Verbindung zwischen den Lastmodulen 104 sowie zwischen dem ersten Lastmodul 104 und dem Hauptmodul 102 hergestellt. Die mechanische Verbindung wird in diesem Beispiel durch das Ineinandergreifen der hydraulischen Kupplungen, d. h. der ersten Zulaufkupplung 148, mit der zweiten Zulaufkupplung 156 sowie der ersten Rücklaufkupplung 150 mit der zweiten Rücklaufkupplung 158, hergestellt. Es ist jedoch zu verstehen, dass hier zusätzliche Rast- oder Sicherungselemente vorgesehen sein können, um eine feste mechanische Verbindung zwischen den einzelnen Modulen 102, 104 herzustellen.

Wenn die Module 102, 104 aneinandergefügt sind, bilden die Abschnitte der Zulaufleitung 152 der einzelnen Lastmodule 104, wie in Figur 2 zu sehen ist, eine durchgehende Zulaufleitung 152, während die Abschnitte der Rücklaufleitung 154 eine durchgehende Rücklaufleitung 154 bilden. Die Steuereinrichtung 140 bildet eine zentrale Verteiler-Steuereinrichtung, welche sowohl die Umwälzpumpe, d. h. deren Antriebsmotor 108, steuert bzw. regelt, insbesondere eine Drehzahlregelung für den Antriebsmotor 108 vornimmt, als auch die Mischeinrichtung durch Ansteuerung des Regulierventils 134 regelt. Darüber hinaus dient die Steuereinrichtung 140 hier als zentrale Steuereinrichtung für die Regulierventile 154 in sämtlichen Lastkreisen 104. In diesen bewirkt sie, wie oben beschrieben, eine Durchflussregelung und dient zum Ein- und Ausschalten der einzelnen Lastkreise. Dazu weist die Steuereinrichtung 140 eine Kommunikationsschnittstelle bzw. eine Kommunikationseinrichtung 181 auf, welche eine Kommunikation mit externen Raumthermostaten 182, in diesem Beispiel über Funk, ermöglicht. In Figur 2 sind nur zwei Raumthermostate 182 gezeigt. Es ist jedoch zu verstehen, dass vorzugsweise für jeden zu temperierenden Raum ein Raumthermostat 182 vorgesehen ist. An dem Raumthermostat 182 kann eine gewünschte Raumtemperatur eingestellt werden. Wenn die tatsächliche Raumtemperatur vom eingestellten Sollwert abweicht, sendet der Raumthermostat 182 ein Signal zu der Kommunikationsschnittstelle 181 der Steuereinrichtung 140, welche daraufhin veranlasst, einen zu dem Raumthermostat 182 zugehörigen Lastkreis durch Öffnen des zugehörigen Regulierventils 164 einzuschalten. Wird eine gewünschte Raumtemperatur erreicht, sendet der Raumthermostat 182 wiederum ein Signal, woraufhin die Steuereinrichtung 140 das zu diesem Lastkreis zugehörige Regulierventil 164 über den Antriebsmotor 166 schließt und damit den Lastkreis, welcher durch den zugehörigen Raum führt, abschaltet.

An dem Elektronikgehäuse 110 ist darüber hinaus ein elektrischer Anschluss 184 ausgebildet, welcher dem elektrischen Anschluss des gesamten hydraulischen Verteilers und all seiner elektrischen Komponenten dient. Der elektrische Anschluss 184 ist hier als Stecker ausgebildet, an welchem eine Netzleitung angeschlossen werden kann. Vorzugsweise ist in dem Elektronikgehäuse 110 ein Netzteil integriert und über die elektrischen Verbindungen 168 zu den Lastmodulen 104 werden lediglich Kleinspannungen übertragen.

### Bezugszeichenliste

- 102: - Hauptmodul
- 104: - Lastmodul
- 106: - Pumpengehäuse
- 108: - Statorgehäuse
- 110: - Elektronikgehäuse
- 112: - Erster Einlass
- 114: - Erster Auslass
- 116: - Strömungsweg
- 118: - Laufrad
- 120: - Aufnahmeraum
- 122: - Zweiter Einlass
- 124: - Zweiter Auslass
- 126: - Kanal
- 128: - Verbindung
- 130: - Mischpunkt
- 132: - Rückschlagventil
- 134: - Regulierventil
- 136: - Motor
- 138: - Temperatursensor
- 140: - Steuereinrichtung bzw. Verteiler-Steuereinrichtung
- 142, 144: - Signalverbindungen
- 146: - Seite
- 148: - Erste Zulaufkupplung
- 150: - Erste Rücklaufkupplung
- 152: - Zulaufleitung
- 154: - Rücklaufleitung
- 156: - Zweite Zulaufkupplung
- 158: - Zweite Rücklaufkupplung
- 160: - Zulaufanschluss
- 162: - Rücklaufanschluss
- 164: - Regulierventil
- 166: - Antriebsmotor
- 168: - Elektrische Verbindung
- 170: - Temperatursensor
- 172: - Modulsteuereinrichtung
- 174: - Elektrische Steckkupplung
- 176: - Endstück
- 178: - Entlüftungsventil
- 180: - Anschluss
- 181: - Kommunikationsschnittstelle
- 182: - Raumthermostat
- 184: - Elektrischer Anschluss
- 202: - Hauptmodul

## Patentansprüche

1. Hydraulischer Verteiler für ein hydraulisches Heizungs- und/oder Kühlsystem, welcher eine Zulaufleitung (152) und eine Rücklaufleitung (154) aufweist, wobei die Zulaufleitung (152) zumindest einen Zulaufanschluss (160) und die Rücklaufleitung (154) zumindest einen Rücklaufanschluss (162) zum Anschluss eines Lastkreises aufweist,
wobei der Verteiler modular aufgebaut ist mit einem Hauptmodul (102) und zumindest einem an das Hauptmodul (102) angefügtes Lastmodul (104),
das Hauptmodul (102) zumindest einen Abschnitt der Zulaufleitung (152) und/oder der Rücklaufleitung (154) sowie einen elektrischen Anschluss aufweist,
das zumindest eine Lastmodul (104) einen Abschnitt der Zulaufleitung (152) mit einem Zulaufanschluss (160) und einen Abschnitt der Rücklaufleitung (154) mit einem Rücklaufanschluss (162) sowie zumindest eine Reguliereinrichtung zum Regulieren des Durchflusses durch einen an den Zulauf- und den Rücklaufanschluss angeschlossenen Lastkreis aufweist, wobei das Hauptmodul (102) ein Umwälzpumpenaggregat in dem Abschnitt der Zulaufleitung (152) oder in dem Abschnitt der Rücklaufleitung (154) aufweist, und
das Hauptmodul (102) eine Verteiler-Steuereinrichtung (140) aufweist, welche zur Steuerung des Umwälzpumpenaggregates und der Reguliereinrichtung (164) in dem zumindest einen und vorzugsweise in mehreren Lastmodulen (104) ausgebildet ist, **dadurch gekennzeichnet, dass** die Verteiler-Steuereinrichtung (140) in ein Motorgehäuse (106) des Umwälzpumpenaggregates oder ein Elektronikgehäuse (110) des Umwälzpumpenaggregates integriert ist.

2. Hydraulischer Verteiler nach Anspruch 1, **dadurch gekennzeichnet, dass** das Hauptmodul (102) eine Mischeinrichtung (134) aufweist und die Verteiler-Steuereinrichtung (140) zur Steuerung dieser Mischeinrichtung (134) ausgebildet ist.

3. Hydraulischer Verteiler nach einem der vorangehenden Ansprüche, **dadurch gekennzeichnet, dass** das Hauptmodul (102) und das Lastmodul (104) zueinander korrespondierende mechanische und hydraulische (114, 122) und eine elektrische (174) Verbindung aufweisen, welche eine lösbare mechanische, hydraulische und elektrische Verbindung zwischen dem Hauptmodul (102) und dem Lastmodul (104) ermöglichen.

4. Hydraulischer Verteiler nach Anspruch 3, **dadurch gekennzeichnet, dass** das Lastmodul (104) an einem ersten Längsende erste hydraulische Kupplungen in Form einer ersten Rücklaufkupplung (150), welche mit dem Abschnitt der Rücklaufleitung (154) verbunden ist, und einer ersten Zulaufkupplung (148), welche mit dem Abschnitt der Zulaufleitung (152) verbunden ist, aufweist und dass vorzugsweise das Lastmodul (104) an einem zweiten, dem ersten Längsende entgegengesetzten Längsende zweite hydraulische Kupplungen in Form einer zweiten Rücklaufkupplung (158), welche mit dem Abschnitt der Rücklaufleitung (154) verbunden ist, und einer zweiten Zulaufkupplung (156), welche mit dem Abschnitt der Zulaufleitung (152) verbunden ist, aufweist, wobei die zweiten hydraulischen Kupplungen (156, 158) derart angeordnet und ausgestaltet sind, dass sie mit den ersten hydraulischen Kupplungen (148, 159) eines weiteren Lastmoduls (104) in Eingriff treten können.

5. Hydraulischer Verteiler Anspruch 4, **dadurch gekennzeichnet, dass** das Hauptmodul (102) an einer dem Lastmodul (104) zugewandten Seite hydraulische Kupplungen (114, 122) aufweist, welche eine Zulaufkupplung und eine Rücklaufkupplung aufweisen und welche derart ausgestaltet sind, dass sie mit den ersten hydraulischen Kupplungen (148, 150) an dem Lastmodul (104) in Eingriff treten können.

6. Hydraulischer Verteiler nach einem der vorangehenden Ansprüche, **dadurch gekennzeichnet, dass** die Verteiler-Steuereinrichtung (140) zumindest eine Kommunikationsschnittstelle (181) zum Empfang von Signalen von einem externen Steuerelement (182), insbesondere einem Raumthermostaten, aufweist.

7. Hydraulischer Verteiler nach Anspruch 4 oder 5, **dadurch gekennzeichnet, dass** die hydraulischen Kupplungen (114, 122, 148, 150) als Steckkupplungen mit einem männlichen Kupplungsteil und einem korrespondierenden weiblichen Kupplungsteil ausgebildet sind.

8. Hydraulischer Verteiler nach einem der vorangehenden Ansprüche, **dadurch gekennzeichnet, dass** das Lastmodul (104) an einem ersten Längsende zumindest einen ersten elektrischen Steckkontakt als Teil einer elektrischen Kupplung (174) aufweist, wobei an dem Hauptmodul (102) an einer dem Lastmodul (104) zugewandten Seite ein korrespondierender zweiter elektrischer Steckkontakt ausgebildet ist, welcher mit dem ersten Steckkontakt des Lastmoduls lösbar in Kontakt bringbar ist.

9. Hydraulischer Verteiler nach Anspruch 8, **dadurch gekennzeichnet, dass** das Lastmodul (104) an einem zweiten, dem ersten Längsende entgegengesetzten zweiten Längsende einen zweiten elektrischen Steckkontakt aufweist, welcher mit einem ersten elektrischen Steckkontakt an einem ersten Längsende eines zweiten Lastmoduls (104) lösbar in Kontakt bringbar sind, wobei vorzugsweise in dem zumindest einen Lastmodul der erste und der zweite elektrische Steckkontakt elektrisch, insbesondere nach Art eines Datenbus (168) miteinander verbunden sind.

10. Hydraulischer Verteiler nach einem der Ansprüche 9 bis 10, **dadurch gekennzeichnet, dass** die Reguliereinrichtung (164) mit dem ersten elektrischen Steckkontakt zur Energieversorgung verbunden ist.

11. Hydraulischer Verteiler nach einem der Ansprüche 8 bis 10, **dadurch gekennzeichnet, dass** das zumindest eine Lastmodul (104) eine elektronische Modul-Steuereinrichtung (172) aufweist, welche elektrisch mit dem ersten Steckkontakt und der Reguliereinrichtung (164) verbunden ist und zur Kommunikation mit der Verteiler-Steuereinrichtung (140) in dem Hauptmodul (102) sowie zur Ansteuerung der Reguliereinrichtung (164) ausgebildet ist, wobei bevorzugt die Modul-Steuereinrichtung (140) des zumindest einen Lastmoduls (104) und die Verteiler-Steuereinrichtung (140) über einen Datenbus miteinander verbunden und weiter bevorzugt zur automatischen Kommunikations-Kopplung ausgebildet sind.

12. Hydraulischer Verteiler nach einem der vorangehenden Ansprüche, **dadurch gekennzeichnet, dass** die Reguliereinrichtung (164) als motorbetriebenes Ventil oder als Umwälzpumpe ausgebildet ist.

13. Hydraulischer Verteiler nach einem der vorangehenden Ansprüche, **dadurch gekennzeichnet, dass** in dem Lastmodul (104) zumindest ein Temperatursensor (170) derart angeordnet ist, dass er die Temperatur (170) eines durch den Rücklaufanschluss strömenden Fluides erfasst, wobei der Temperatursensor (170) vorzugsweise mit der Verteiler-Steuereinrichtung (140) signalverbunden ist.

14. Hydraulischer Verteiler nach einem der vorangehenden Ansprüche, **dadurch gekennzeichnet, dass** das zumindest eine Lastmodul (104) an einem ersten Längsende zumindest eine erste mechanische Kupplung und das Hauptmodul (102) an einer dem Lastmodul zugewandten Seite zumindest eine zweite mechanische Kupplung aufweist, welche lösbar mit der ersten mechanischen Kupplung verbindbar ist.

15. Hydraulischer Verteiler nach einem der vorangehenden Ansprüche, **dadurch gekennzeichnet, dass** das zumindest eine Lastmodul (104) an einem zweiten Längsende zumindest eine zweite mechanische Kupplung aufweist, welche lösbar mit einer ersten mechanischen Kupplung an einem ersten Längsende eines zweiten Lastmoduls (104) verbindbar ist.

16. Hydraulischer Verteiler nach einem der vorangehenden Ansprüche, **dadurch gekennzeichnet, dass** zumindest derjenige Teil des Lastmoduls (104), in welchem der Abschnitt der Zulaufleitung (152), der Abschnitt der Rücklaufleitung (154) sowie der Zulauf (112)- und der Rücklaufanschluss (124) gelegen sind, als einstückiges Bauteil, vorzugsweise aus Kunststoff ausgebildet ist.

## Claims

1. A hydraulic manifold for a hydraulic heating and/or cooling system which comprises a feed conduit (152) and a return conduit (154), wherein the feed conduit (152) comprises at least one feed connection (160) and the return conduit (154) comprises at least one return connection (162), for the connection of a load circuit (228),
wherein
the manifold is constructed in a modular manner with a main module (102) and at least one load module (104) which is joined onto the main module (102; 202),
the main module (102) comprises at least one section of the feed conduit (152; 212) and/or of the return conduit (154), as well as an electric connection,
the at least one load module (104) comprises a section of the feed conduit (152) with a feed connection (160) and a section of the return conduit (154) with a return connection (162) as well as at least one regulating device for regulating the flow through a load circuit which is connected to the feed connection and to the return connection, wherein the main module (102) comprises a circulation pump assembly in the section of the feed conduit (152) or in the section of the return conduit (154), and
the main module (102) comprises a manifold control device (140) which is designed for the control of the circulation pump assembly and of the regulating device (164) in the at least one and preferably in several load modules (104), **characterised in that** the manifold control device (140) is integrated into a motor housing (106) of the circulation pump assembly or into an electronics housing (110) of the circulation pump assembly.

2. A hydraulic manifold according to claim 1, **characterised in that** the main module (102) comprises a mixing device (134) and the manifold control device (140) is designed for the control of this mixing device (134).

3. A hydraulic manifold according to claim 1, **characterised in that** the main module (102) and the load module (104) comprise mechanical and hydraulic (114, 122) and an electrical (174) connection which correspond to one another and which permit a releasable mechanical, hydraulic and electrical connection between the main module (102) and the load module (104).

4. A hydraulic manifold according to claim 3, **characterised in that** the load module (104) at a first longitudinal end comprises first hydraulic couplings in the form of a first return coupling (150) which is connected to the section of the return conduit (154), and of a first feed coupling (148) which is connected to the section of the feed conduit (154), and that preferably the load module (104) at a second longitudinal end which is opposite the first longitudinal end comprises second hydraulic couplings in the form of a second return coupling (158) which is connected to the section of the return conduit (154), and of a second feed coupling (156) which is connected to the section of the feed conduit (152), wherein the second hydraulic couplings (156, 158) are arranged and designed in a manner such that they can come into engagement with the first hydraulic couplings (148, 159) of a further load module (104).

5. A hydraulic manifold according to claim 4, **characterised in that** the main module (102) at a side which faces the load module (104) comprises hydraulic couplings (114, 122) which comprise a feed coupling and a return coupling and which are designed in a manner such that they can come into engagement with the first hydraulic couplings (148, 150) on the load module (104).

6. A hydraulic manifold according to one of the preceding claims, **characterised in that** the manifold control device (140) comprises at least one communication interface (181) for receiving signals from an external control element (182), in particular from a room thermostat.

7. A hydraulic manifold according to claim 4 or 5, **characterised in that** the hydraulic couplings (114, 122, 148, 150) are designed as plug-in couplings with a male coupling part and a corresponding female coupling part.

8. A hydraulic manifold according to one of the preceding claims, **characterised in that** the load module (104) at a first longitudinal end comprises at least one first electric plug-in contact as part of an electrical coupling (174), wherein a corresponding second electrical plug-in contact which can be releasably brought into contact with the first plug-in contact of the load module is formed on the main module (102) on a side which faces the load module (104).

9. A hydraulic manifold according to claim 8, **characterised in that** the load module (104) at a second longitudinal end which is opposite to the first longitudinal end comprises a second electric plug-in contact which can be releasably brought into contact with a first electric plug-in contact on a first longitudinal end of a second load module (104), wherein preferably the first and the second electrical plug-in contact are connected to one another in an electrical manner, in particular in the manner of a data bus (168), in the at least one load module.

10. A hydraulic manifold according to one of the claims 9 to 10, **characterised in that** the regulating device (164) is connected to the first electrical plug-in contact for the energy supply.

11. A hydraulic manifold according to one of the claims 8 to 10, **characterised in that** the at least one load module (104) comprises an electronic module control device (172) which is electrically connected to the first plug-in contact and to the regulating device (164) and is designed for the communication with the manifold control device (140) in the main module (102) as well as for activating the regulating device (164), wherein preferably the module control device (140) of the at least one load module (104) and the manifold control device (140) are connected to one another via a data bus and further preferably are designed for automatic communication coupling.

12. A hydraulic manifold according to one of the preceding claims, **characterised in that** the regulating device (164) is designed as a motor-operated valve or as a circulation pump.

13. A hydraulic manifold according to one of the preceding claims, **characterised in that** at least one temperature sensor (170) is arranged in the load module (104) in a manner such that it detects the temperature (170) of a fluid which flows through the return connection, wherein the temperature sensor (170) is signal-connected preferably to the manifold control device (140).

14. A hydraulic manifold according to one of the preceding claims, **characterised in that** the at least one load module (104) at a first longitudinal end comprises at least one first mechanical coupling, and the main module (102) at a side which faces the load module comprises at least one second mechanical coupling which is releasably connectable to the first mechanical coupling.

15. A hydraulic manifold according to one of the preceding claims, **characterised in that** the at least one load module (104) at a second longitudinal end comprises at least one second mechanical coupling which is releasably connectable to a first mechanical coupling at a first longitudinal end of a second load module (104).

16. A hydraulic manifold according to one of the preceding claims, **characterised in that** at least that part of the load module (104), in which the section of the feed conduit (152), the section of the return conduit (154) as well as the feed connection (112) and the return connection (124) are situated, is designed as a single-piece component, preferably of plastic.

## Revendications

1. Distributeur hydraulique pour un système de chauffage et/ou de refroidissement hydraulique, qui comprend un conduit d'arrivée (152) et un conduit de retour (154), le conduit d'arrivée (152) comportant au moins un raccord d'arrivée (160) et le conduit de retour comportant au moins un raccord de retour (162) pour le raccordement d'un circuit de charge,
le distributeur étant conçu de façon modulaire avec un module principal (102) et au moins un module de charge (104) ajouté au module principal (102),
le module principal (102) comprenant au moins un tronçon du conduit d'arrivée (152) et/ou du conduit de retour (154) ainsi qu'un raccord électrique,
ledit au moins un module de charge (104) comprenant un tronçon du conduit d'arrivée (152) avec un raccord d'arrivée (160) et un tronçon du conduit de retour (154) avec un raccord de retour (162) ainsi qu'au moins un dispositif de régulation pour régler le flux passant par un circuit de charge raccordé au raccord d'arrivée et au raccord de retour,
le module principal (102) comprenant un groupe motopompe de refoulement dans le tronçon du conduit d'arrivée (152) ou dans le tronçon du conduit de retour (154) et
le module principal (102) comprenant un dispositif de commande de distributeur (140) qui est configuré pour la commande du groupe motopompe de refoulement et du dispositif de régulation (164) dans ledit au moins un et, de préférence, dans plusieurs modules de charge (104),
**caractérisé en ce que** le dispositif de commande de distributeur (140) est intégré dans un carter de moteur (106) du groupe motopompe de refoulement ou dans un boîtier électronique (110) du groupe motopompe de refoulement.

2. Distributeur hydraulique selon la revendication 1, **caractérisé en ce que** le module principal (102) comprend un dispositif mélangeur (134) et **en ce que** le dispositif de commande de distributeur (140) est configuré pour la commande de ce dispositif mélangeur (134).

3. Distributeur hydraulique selon l'une des revendications précédentes, **caractérisé en ce que** le module principal (102) et le module de charge (104) comprennent des liaisons mécaniques et hydrauliques (114, 122) et une liaison électrique (174), correspondant les unes aux autres, qui rendent possible une liaison amovible mécanique, hydraulique et électrique entre le module principal (102) et le module de charge (104).

4. Distributeur hydraulique selon la revendication 3, **caractérisé en ce que** le module de charge (104) comprend à une première extrémité longitudinale des premiers accouplements hydrauliques sous la forme d'un premier accouplement de retour (150) qui est raccordé au tronçon du conduit de retour (154) et d'un premier accouplement d'arrivée (148) qui est raccordé au tronçon du conduit d'arrivée (152) et **en ce que**, de préférence, le module de charge (104) comprend à une deuxième extrémité longitudinale opposée à la première extrémité longitudinale des deuxièmes accouplements hydrauliques sous la forme d'un deuxième accouplement de retour (158) qui est raccordé au tronçon du conduit de retour (154) et d'un deuxième accouplement d'arrivée (156) qui est raccordé au tronçon du conduit d'arrivée (152), les deuxièmes accouplements hydrauliques (156, 158) étant disposés et configurés de façon telle qu'ils puissent venir en prise avec les premiers accouplements hydrauliques (148, 150) d'un autre module de charge (104).

5. Distributeur hydraulique selon la revendication 4, **caractérisé en ce que** le module principal (102) comprend sur un côté orienté vers le module de charge (104) des accouplements hydrauliques (114, 122) qui comportent un accouplement d'arrivée et un accouplement de retour et qui sont configurés de façon telle qu'ils puissent venir en prise avec les premiers accouplements hydrauliques (148, 150) sur le module de charge (104).

6. Distributeur hydraulique selon l'une des revendications précédentes, **caractérisé en ce que** le dispositif de commande de distributeur (140) comprend au moins une interface de communication (181) pour recevoir des signaux provenant d'un élément de commande externe (182), notamment d'un thermostat ambiant.

7. Distributeur hydraulique selon la revendication 4 ou 5, **caractérisé en ce que** les accouplements hydrauliques (114, 122, 148, 150) sont configurés comme accouplements à enfichage avec une partie d'accouplement mâle et une partie d'accouplement femelle correspondante.

8. Distributeur hydraulique selon l'une des revendications précédentes, **caractérisé en ce que** le module de charge (104) comprend à une première extrémité longitudinale au moins un premier contact électrique à enfichage faisant partie d'un accouplement électrique (174), sur le module principal (102) sur un côté orienté vers le module de charge (104), un deuxième contact électrique à enfichage correspondant étant formé qui est adapté pour pouvoir venir en contact, de manière amovible, avec le premier contact à enfichage du module de charge.

9. Distributeur hydraulique selon la revendication 8, **caractérisé en ce que** le module de charge (104) comprend à une deuxième extrémité longitudinale opposée à la première extrémité longitudinale un deuxième contact électrique à enfichage qui est adapté pour pouvoir venir en contact, de manière amovible, avec un premier contact électrique à enfichage d'un deuxième module de charge (104), de préférence, sur ledit au moins un module de charge, le premier et le deuxième contacts électriques à enfichage étant reliés l'un à l'autre électriquement, notamment à la façon d'un bus de données (168).

10. Distributeur hydraulique selon l'une des revendications 8 à 9, **caractérisé en ce que** le dispositif de régulation (164) est relié au premier contact électrique à enfichage pour l'alimentation en énergie.

11. Distributeur hydraulique selon l'une des revendications 8 à 10, **caractérisé en ce que** ledit au moins un module de charge (104) comprend un dispositif électrique de commande de module (172) qui est relié électriquement au premier contact à enfichage et au dispositif de régulation (164) et qui est configuré pour la communication avec le dispositif de commande de distributeur (140) dans le module principal (102) ainsi que pour la commande du dispositif de régulation (164), de préférence, le dispositif de commande de module (140) dudit au moins un module de charge (104) et le dispositif de commande de distributeur (140) étant reliés l'un à l'autre via un bus de données et, également de préférence, étant configurés pour un accouplement automatique de communication.

12. Distributeur hydraulique selon l'une des revendications précédentes, **caractérisé en ce que** le dispositif de régulation (164) est configuré comme valve motorisé ou comme pompe de refoulement.

13. Distributeur hydraulique selon l'une des revendications précédentes, **caractérisé en ce que**, dans le module de charge (104), au moins un capteur de température (170) est disposé de façon telle qu'il détermine la température (170) d'un fluide passant par le raccordement de retour, le capteur de température (170) étant relié par un signal, de préférence, au dispositif de commande de distributeur (140).

14. Distributeur hydraulique selon l'une des revendications précédentes, **caractérisé en ce que** ledit au moins un module de charge (104) comprend à une première extrémité longitudinale au moins un premier accouplement mécanique et **en ce que** le module principal (102) comprend sur un côté orienté vers le module de charge au moins un deuxième accouplement mécanique qui est adapté pour pouvoir être relié, de manière amovible, au premier accouplement mécanique.

15. Distributeur hydraulique selon l'une des revendications précédentes, **caractérisé en ce que** ledit au moins un module de charge (104) comprend à une deuxième extrémité longitudinale au moins un deuxième accouplement mécanique qui est adapté pour pouvoir être relié, de manière amovible, à un premier accouplement mécanique à une première extrémité longitudinale d'un deuxième module de charge (104).

16. Distributeur hydraulique selon l'une des revendications précédentes, **caractérisé en ce qu'**au moins la partie du module de charge (104) dans laquelle sont situés le tronçon du conduit d'arrivée (152), le tronçon du conduit de retour (154) ainsi que les raccords d'arrivée (112) et de retour (124), est configurée comme un composant monobloc, de préférence en matière synthétique.
